# EUROPEAN PATENT APPLICATION

(11) **EP 4 311 419 A1**
(43) Date of publication of application: **31.01.2024**
(21) Application number: 22187160.1
(22) Date of filing: 27.07.2022
(51) Int. Cl.: A01D 34/73

(54) **BLADE ATTACHMENT FOR A GARDEN TOOL**

(71) Applicant: Techtronic Cordless GP, Anderson, SC 29621 (US)
(72) Inventor: Chung, Koon For, Kwai Chung (HK)
(74) Representative: Neuburger, Benedikt Maria

(57) **Abstract**

A blade attachment system for a garden tool including a rotatable output shaft. The blade attachment system includes a blade holder that can be operatively coupled to the output shaft for rotation therewith and that includes a face for engagement by a blade assembly. A clamp device is engageable with the blade assembly to hold the blade assembly on the blade holder, and a shear device is coupled between the blade holder and the clamp device.

## Description

### BACKGROUND OF THE INVENTION

The present invention relates to a garden tool and, more specifically to a blade attachment mechanism for a garden tool.

A garden tool, such as a lawn mower, typically includes a cutting blade that is rotated by a motor, internal combustion engine, or other source of rotational motion. The blade is often attached to the motor shaft between a blade holder and a blade clamp that are secured by a nut threaded onto the motor shaft. For some garden tools, a cooling fan may be located on top of the blade holder or formed as an integral piece with the blade holder, and a damper is typically coupled between the blade and the motor shaft to lessen forces that may be transmitted to the motor shaft and/or the motor when the blade hits a hard obstacle such as a rock.

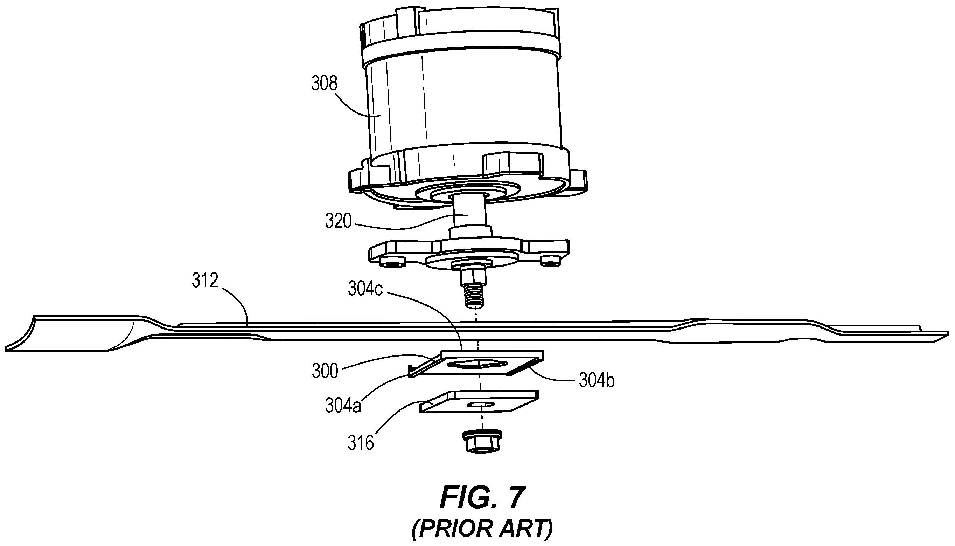

FIG. 7 illustrates an existing damper 300 that is coupled between the blade 312 and the motor shaft 320 and that has raised edges 304a-c to engage the blade 312 and the blade clamp 312. When the blade 312 strikes an obstacle such as a rock, the damper 300 absorbs the forces that would otherwise transfer to the motor shaft 320 and/or the motor 308. The damper 300, the blade 312, and blade clamp 316 each have a thickness that corresponds to a length of the motor shaft 320 that accommodates these components so that the blade is firmly clamped between the blade clamp 316 and the motor shaft 320. Due to this fixed length, the motor shaft 320 cannot accommodate more than one blade in addition to the other components, including the damper 300.

### SUMMARY OF THE INVENTION

In one embodiment, the invention provides a blade attachment system for a garden tool including a rotatable output shaft. The blade attachment system includes a blade holder that can be operatively coupled to the output shaft for rotation therewith and that includes a face for engagement by a blade assembly. A clamp device is engageable with the blade assembly to hold the blade assembly on the blade holder, and a shear device is coupled between the blade holder and the clamp device.

In another embodiment, the invention provides a garden tool including a prime mover that has an output shaft rotatable by the prime mover about an axis. The garden tool also includes a blade holder that is operatively coupled to the output shaft for rotation therewith and that has a face, and a blade assembly that is coupled to the blade holder for rotation therewith. A clamp device is engaged with the blade assembly to hold the blade assembly on the output shaft, and a shear device coupled between the blade holder and the clamp device.

In another embodiment, the invention provides a damper configured to be coupled to a garden tool, the damper including a coupling portion that is coupled to an output shaft of the motor of the garden tool, and a pin portion that extends from the coupling portion and engages the blade holder coupled to the output shaft.

In some embodiments, the blade holder includes a hub and the shear device is coupled to the hub.

In some embodiments, the shear device may be at least partially defined by a post engageable with the blade holder.

In some embodiments, the clamp device defines a shear device hole, and the shear device has a first portion that is coupled to the blade holder and a second portion disposed in the shear device hole.

In some embodiments, the clamp device may define a shaft hole and the shear device hole is separate from the shaft hole.

In some embodiments, at least a portion of the shear device is formed of a material that is softer than a material of the blade holder.

In some embodiments, the shear device may be a component that is separate from one or both of the blade holder and the clamp device.

In some embodiments, the invention may include a blade assembly that has a first blade engaged with the face and a second blade engaged with the first blade. The shear device may be coupled to one or both of the first blade and the second blade.

Other aspects of the invention will become apparent by consideration of the detailed description and accompanying drawings.

### BRIEF DESCRIPTION OF THE DRAWINGS

FIG. 1 is a bottom view of a mower including a cross-cut blade.
FIG. 2 is a perspective view illustrating another embodiment of the prime mover, blade assembly, and shear device.
FIG. 3 is a perspective view illustrating a blade holder and shear device according to FIG. 2.
FIG. 4 is a perspective view illustrating another embodiment of a blade holder and a shear device.
FIG. 5 is a perspective exploded view of a prime mover, a blade assembly, and a shear device according to FIG. 1.
FIG. 6A is a perspective section view of the prime mover, blade assembly, and shear device according to FIG. 2.
FIG. 6B is a section view of the prime mover, blade assembly, and shear device according to FIG. 2.
FIG. 7 is a perspective view illustrating a damper coupled to a single cutting blade and motor according to the prior art.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

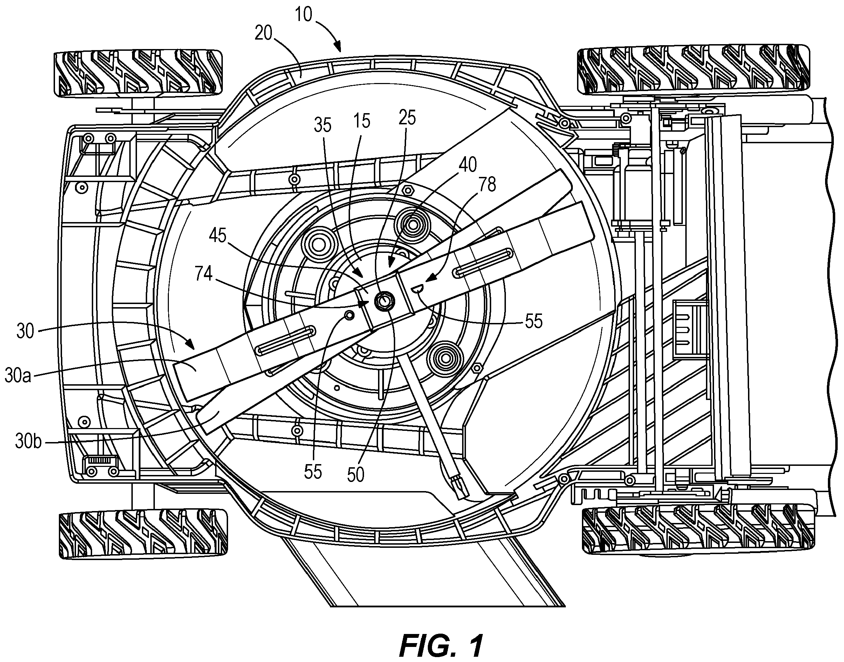

FIG. 1 illustrates an exemplary garden tool 10 (e.g., a lawn mower, a brush cutter) including a motor or engine 15 and a deck 20. The motor 15 may be electrically powered (e.g., via one or more batteries or battery packs) or by other means (e.g., gasoline, etc.). Although the term "motor" is used in the Detailed Description when referring to the illustrated prime mover for the garden tool 10, other types of prime movers may be used (e.g., an internal combustion engine, etc.). The motor 15 has an output shaft 25 that extends below the deck 20 and that rotatably supports one or more blades 30 about a rotational axis 25a via a blade holder assembly or blade attachment mechanism 35. As shown, the blades 30 are cross-cut blades, although other blades may be installed on the rotational driver 15. It will be appreciated that the invention is especially advantageous for two or more blades because multiple blades have a larger inertia. The output shaft 25 and the blade attachment mechanism 35 cooperatively define a blade attachment system. Although the invention is described in detail herein relative to a mower, it should be appreciated that the invention may apply to other tools (e.g., brush cutters, etc.) that include blades.

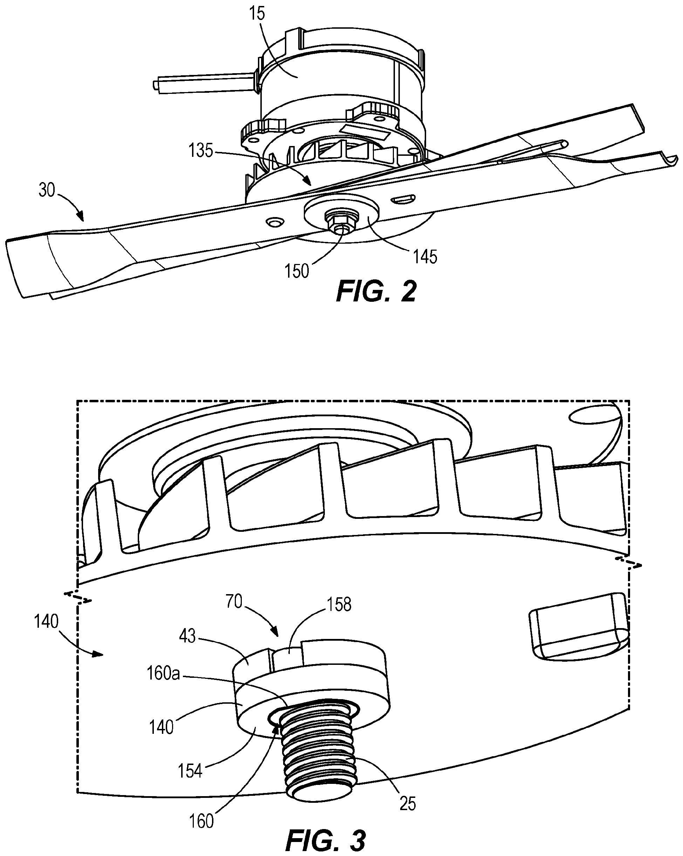

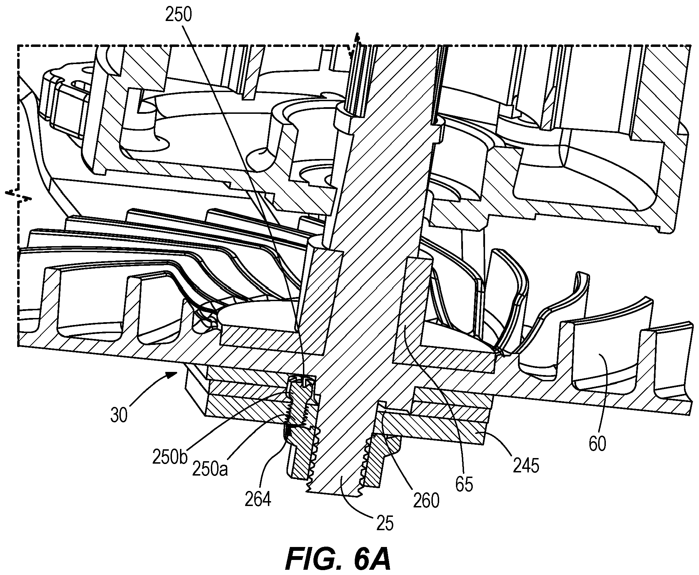

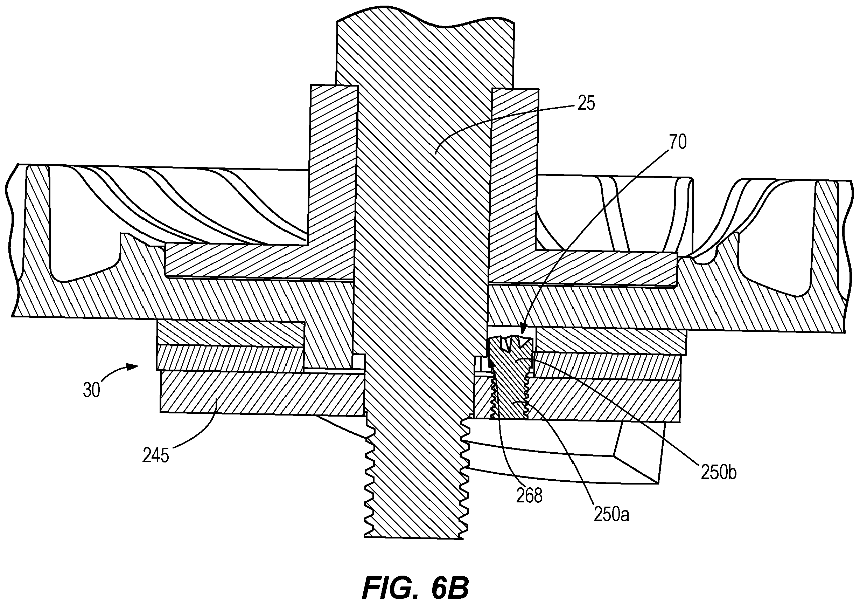

The blade attachment mechanism 35 includes a blade holder 40 coupled to the output shaft 25 (e.g., via hub 43) and a clamp 45. The blade holder 40 and the clamp 45 sandwich the cross-cut blade 30, and a nut 50 secures the blade attachment mechanism 35 to the output shaft 25. In some embodiments, the clamp 45 may directly secure the blade attachment mechanism 35 to the output shaft 25. As illustrated, the blade holder 40 has alignment features in the form of protrusions 55 to orient the cross-cut blade 30 on the output shaft 25, and the blade holder 40 may have a fan 60 (shown in FIG. 2) that is integrally formed on top of the blade holder 40 (e.g., facing the motor 15). In one embodiment, the alignment protrusions 55 may have a generally circular shape. In other embodiments, the alignment protrusion 55 may define a D-shape with a flat surface 55a and an arcuate surface 55b. Other profiles for the alignment protrusions 55 may be used instead. The alignment protrusions 55 may be shaped to facilitate proper coupling of the cross-cut blade 30 to the motor 15. As illustrated in FIG. 1, the blade holder 40 includes two alignment protrusions 55 extending from the blade holder 40, one alignment protrusion 55 that has a generally circular shape and one alignment protrusion 55 that has a D-shape. The alignment protrusions are optional and may not be included in some embodiments. An optional bushing 65 (shown in FIG. 6) may be coupled to the output shaft 25 between the motor 15 and the blade holder 40. The cross-cut blade 30 includes a mounting hole 74 and at least one alignment hole 78 in which an alignment protrusion 55 is at least partially disposed. The output shaft 25 is disposed in and extends through the mounting hole 74.

A user may desire to couple a cross-cut blade 30 to the motor 15 in place of a single cutting blade. The cross-cut blade 30 incorporates a leading, upper blade 30a coupled to a following, lower blade 30b. The cross-cut blade 30 cuts the grass into smaller, shorter clippings. The thickness of the cross-cut blade 30 is larger than the thickness of a single cutting blade. The fixed length of the output shaft 25 may preclude use of a traditional damper, resulting in additional vibration transmitted to the motor 15 when the cross-cut blade 30 strikes a hard object such as a rock. This can lead to increased wear on the motor 15, and a shortened lifespan of the motor 15.

FIGS. 2-3 illustrate an exemplary blade attachment mechanism 135 that can be used to attach the cross-cut blade 30 to the output shaft 25. As shown, the blade attachment mechanism 135 includes a blade holder 138 with a shear device extension or hub 43. The hub 43 may be made from a relatively hard material (e.g., fiberglass nylon, metal, composite, etc.) and has one or more slots 70. As illustrated in FIG. 3, the hub 43 includes one slot or hole or indent 70 (referred to as a 'slot' for purposes of description), although two or more slots 70 may be included. A shear device 140 (e.g., a washer) is coupled to the output shaft 25 and rotatable with the output shaft 25. The shear device 140 includes a relatively soft material (when compared to the material of the blade holder 138 or the hub 43; e.g., nylon, polyacetal, plastic, etc.) and is positioned at least partially within the mounting hole 74 of the cross-cut blade 30. A clamp device 145 (e.g., a washer) is coupled to the output shaft 25 for rotation with the output shaft 25 by a fastener 150 (e.g., a hex nut). The clamp device 145 is illustrated with a cylindrical shape, although other shapes are possible. The blade attachment mechanism 135 may also include a bushing similar to the bushing 65 as described above.

The shear device 140 defines a base 154 and one or more shear pins or posts 158 that extend from the base 154. The shear pin 158 is illustrated as cylindrical in shape although other shapes are considered. The base 154 defines a hole 160 that defines a D shape having a flat surface 160a that corresponds to and engages the flat surface 26 of the output shaft 25. In some embodiments, the shear device 140 may be defined at least in part by one or more of the alignment protrusions 55.

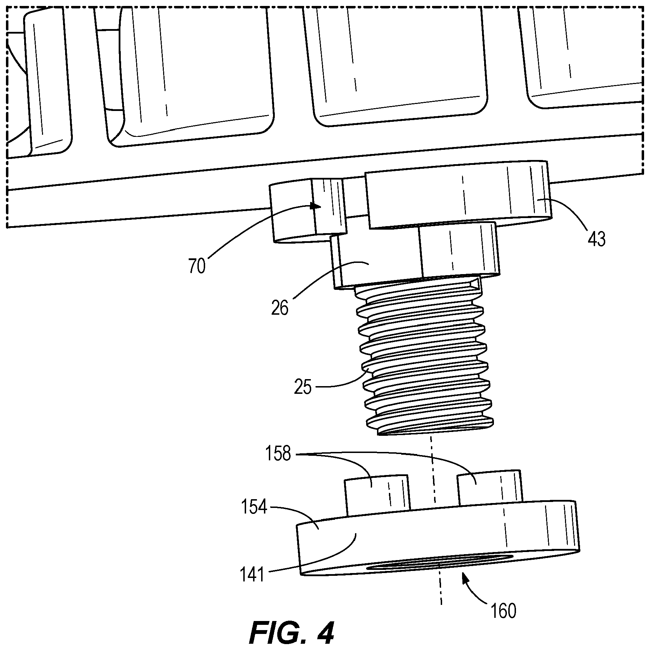

FIG. 4 illustrates another exemplary shear device 141. The shear device 141 includes two shear pins 158 that extend from the base 154 and that are disposed in two slots 70 defined in the hub 43. It should be appreciated that the clamp device 145 and the shear device 140 and/or the shear device 141 may be formed integrally or otherwise fixed to each other (e.g., via co-molding, over-molding, etc.), or formed as separate components that engage each other.

Returning to FIGS. 3 and 4, the blade attachment mechanism 135 provides damping of vibration of the cross-cut blade 30 resulting from a strike of a hard object. In some embodiments, the rotational output of the motor 15 is transmitted from the output shaft 25 to the clamp device 145 to the shear device 140 to the blade holder 138 to the cross-cut blade 30. The transmission path may be different depending on the interactions of various components. As a result of the cross-cut blade 30 striking a hard object, the cross-cut blade 30 stalls, which causes the blade attachment mechanism 135 to stall (e.g., through the alignment protrusion(s) 55). On the other hand, continued rotation of the output shaft 25 by the prime mover 15 causes the shear device 140 (or the shear device 141) and the clamp device 145 to continue rotating. As a result, the shear pin(s) 158 is/are deformed or fractured (e.g., cut or broken) to absorb most of the energy that would otherwise be transmitted to the output shaft 25and the prime mover 15. As the output shaft 25, and the hub 43, continue rotation about the rotational axis 25a, the hub 43 engages the shear pin(s) 158, which imparts a shearing force on the shear pin(s) 158. Due to the softer material of the shear pin(s) 158, the shear device 140, 141 inhibits transfer of a significant amount of energy to the output shaft 25.

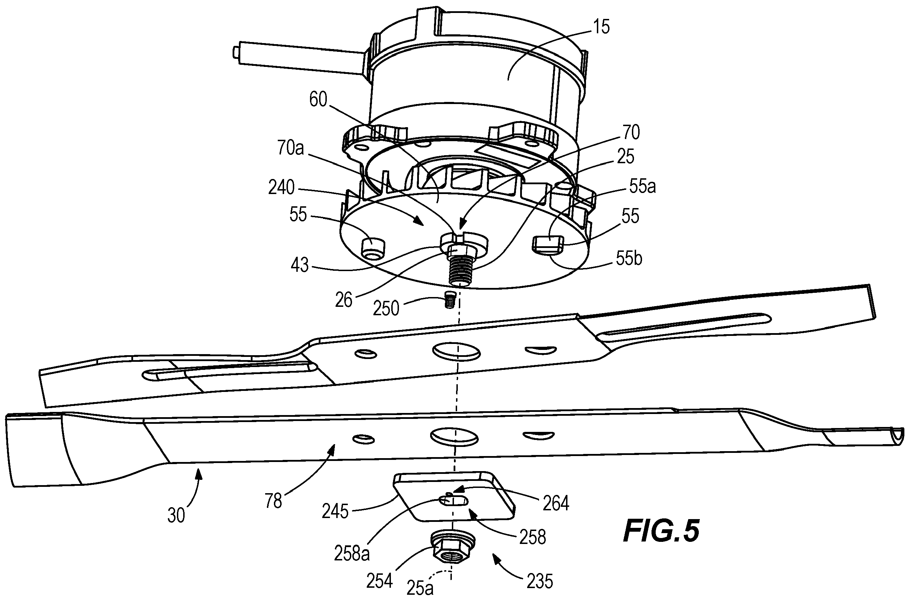

FIGS. 5 and 6A-6B illustrate another exemplary blade attachment mechanism 235 that can be used to attach the cross-cut blade 30 to the output shaft 25. As shown, the blade attachment mechanism 235 includes a blade holder 240 with a shear device extension, or hub 43, with one or more slots 70. As illustrated, the hub 43 includes one slot 70. The blade attachment mechanism 235 also includes a clamp device 245, a shear screw 250, and a fastener 254.

The clamp device 245 is coupled to the output shaft 25 and is rotatable with the output shaft 25 about the rotational axis 25a. The clamp device 245 may be coupled to the output shaft 25 by a fastener 254, such as a nut and a washer, or by another removable coupling processes. The output shaft 25 extends through a mounting hole 258 in the clamp device 245. The mounting hole 258 includes a flat face 258a that corresponds to and engages a flat surface 26 of the output shaft 25. The clamp device 245 may have a rectangular, circular, or other shape. As shown in FIG. 6A, the clamp device 245 includes a clamping face 260 that abuts the cross-cut blade 30 when the clamp device 245 is coupled to the output shaft 25. The fastener 254 couples the clamp device 245 and the shear screw 250 to the output shaft 25.

With continued reference to FIGS. 6A and 6B, a shear device 250 (e.g., a pin, a screw, a bolt, etc.) is coupled between the output shaft 25 and the cross-cut blade 30. The shear device 250 is coupled to the clamp device 245 (e.g., by threaded engagement) and extends in a direction parallel to the rotational axis 25a. The shear device 250 is at least partially disposed in the slot 70 to shear, or at least partially shear, when the cross-cut blade 30 impacts a hard object. In the illustrated embodiment, the shear device 250 has a threaded portion 250a and a head portion 250b. The threaded portion 250a threadably engages a threaded hole 264 in the clamp device 245. The hole 264 is positioned adjacent and spaced from the mounting hole 258. When the shear device 250 is coupled to the clamp device 245, the head portion 250b is at least partially disposed in the slot 70. As shown in FIG. 6B, the head portion 250b may be spaced from the output shaft 25 such that a gap 268 is defined between the head portion 250b and the output shaft 25. The head portion 250b may also or instead be spaced from the cross-cut blade 30 by a small gap. It should be appreciated that the shear device 250 may be coupled to the clamp device 245 by riveting or another coupling.

In some embodiments, the rotational output of the motor 15 is transmitted from the output shaft 25 to the clamp device 245 to the shear device 250 to the blade holder 240 to the cross-cut blade 30. The transmission path may be different depending on the interaction and coupling between various components of the blade attachment mechanism 235. The blade attachment mechanism 235 provides damping of vibration of the cross-cut blade 30 resulting from a strike of a hard object. As a result of the cross-cut blade 30 striking a hard object, the cross-cut blade 30 temporarily ceases rotation with the output shaft 25. The shear screw 250 is coupled to the cross-cut blade 30 via threaded engagement of the threaded portion 250a with the hole 264. As the output shaft 25 and the hub 43 of the blade attachment mechanism 235 continues rotation about the rotational axis 25a, the hub 43 engages the head portion 250b of the shear screw 250, which imparts a shearing force on the shear screw 250. The shear screw 250 comprises a material that is softer than the material comprising the hub 43. The shearing force imparted on the shear screw 250 thereby shears the shear screw 250.

As described above, some or all illustrated features may be omitted in a particular implementation within the scope of the present disclosure, and some illustrated features may not be required for implementation of all embodiments. The features described above may be implemented in an order different from the order described above and does not prohibit implementation in another order or combination.

## Claims

1. A blade attachment system for a garden tool including a rotatable output shaft, the blade attachment system comprising:
a blade holder configured to be operatively coupled to the output shaft for rotation therewith and including a face configured to be engaged by a blade assembly;
a clamp device configured to engage the blade assembly and hold the blade assembly on the blade holder; and
a shear device coupled between the blade holder and the clamp device.

2. The blade attachment system of claim 1, wherein the blade holder includes a hub and the shear device is coupled to the hub.

3. The blade attachment system of claim 1 or 2, wherein the shear device is at least partially defined by a post engageable with the blade holder.

4. The blade attachment system of claim 1, wherein the clamp device defines a shear device hole, and wherein the shear device has a first portion coupled to the blade holder and a second portion disposed in the shear device hole.

5. The blade attachment system of claim 4, wherein the clamp device further defines a shaft hole and the shear device hole is separate from the shaft hole.

6. The blade attachment system of claims 1-5, wherein at least a portion of the shear device is formed of a material that is softer than a material of the blade holder.

7. The blade attachment system of claim 1, wherein the shear device is a component that is separate from one or both of the blade holder and the clamp device.

8. A garden tool comprising:
a prime mover including an output shaft rotatable by the prime mover about an axis;
a blade holder operatively coupled to the output shaft for rotation therewith and including a face; a blade assembly coupled to the blade holder for rotation therewith;
a clamp device engaged with the blade assembly to hold the blade assembly on the output shaft; and
a shear device coupled between the blade holder and the clamp device.

9. The garden tool of claim 8, wherein the blade holder includes a hub and the shear device is coupled to the hub.

10. The garden tool of claim 8 or 9, wherein the shear device is at least partially defined by a post engageable with the blade holder.

11. The garden tool of claim 9, wherein the clamp device defines a shear device hole, and wherein the shear device has a first portion coupled to the blade holder and a second portion disposed in the shear device hole.

12. The garden tool of claim 11, wherein the clamp device further defines a shaft hole receiving the output shaft and the shear device hole is separate from the shaft hole.

13. The garden tool of claim 9, wherein the shear device is a component that is separate from one or both of the blade holder and the clamp device.

14. The garden tool of claims 9-13, wherein at least a portion of the shear device is formed of a material that is softer than one or both of the blade holder and the clamp device.

15. The garden tool of claims 9-14, wherein the blade assembly includes a first blade that is engaged with the face and a second blade that is engaged with the first blade, and wherein the shear device is coupled to one or both of the first blade and the second blade.
